(19) **Europäisches Patentamt / European Patent Office / Office européen des brevets**

(11) **EP 1 735 782 B1**

(12) **EUROPEAN PATENT SPECIFICATION**

(45) Date of publication and mention
of the grant of the patent:
**14.05.2008 Bulletin 2008/20**

(51) Int Cl.:
**G11B 7/005** *(2006.01)*          **G11B 7/007** *(2006.01)*
**G11B 7/09** *(2006.01)*

(21) Application number: **05716545.8**

(22) Date of filing: **06.04.2005**

(86) International application number:
**PCT/EP2005/003610**

(87) International publication number:
**WO 2005/101384 (27.10.2005 Gazette 2005/43)**

(54) **ARRANGEMENT FOR OBTAINING A TRACK WOBBLE SIGNAL**

ANORDNEN ZUM ERHALTEN EINES SPUR-WOBBEL-SIGNALS

DISPOSITIF DE PRODUCTION DE SIGNAL D'OSCILLATION DE PISTE

(84) Designated Contracting States:
**AT BE BG CH CY CZ DE DK EE ES FI FR GB GR HU IE IS IT LI LT LU MC NL PL PT RO SE SI SK TR**

(30) Priority: **14.04.2004 DE 102004018537**
**01.07.2004 DE 102004032127**

(43) Date of publication of application:
**27.12.2006 Bulletin 2006/52**

(73) Proprietor: **Thomson Licensing**
**92100 Boulogne-Billancourt (FR)**

(72) Inventors:
• **BÜCHLER, Christian**
**78052 Villingen-Schwenningen (DE)**
• **BALLWEG, Christof**
**78050 Villingen-Schwenningen (DE)**

(74) Representative: **Schmidt-Uhlig, Thomas**
**Deutsche Thomson-Brandt GmbH**
**European Patent Operations**
**Karl-Wiechert-Allee 74**
**D-30625 Hannover (DE)**

(56) References cited:
**EP-A- 1 225 570          WO-A-98/01855**
**WO-A-03/017261**

**Description**

The present invention relates to an arrangement by means of which a signal-to-noise ratio which is as optimum as possible is obtained during the recovery of a signal which itself is used for recovery of the address information contained in a wobbled track on an optical storage medium, by which means it is possible to read the address information stored in an optical storage medium, with as few errors as possible.

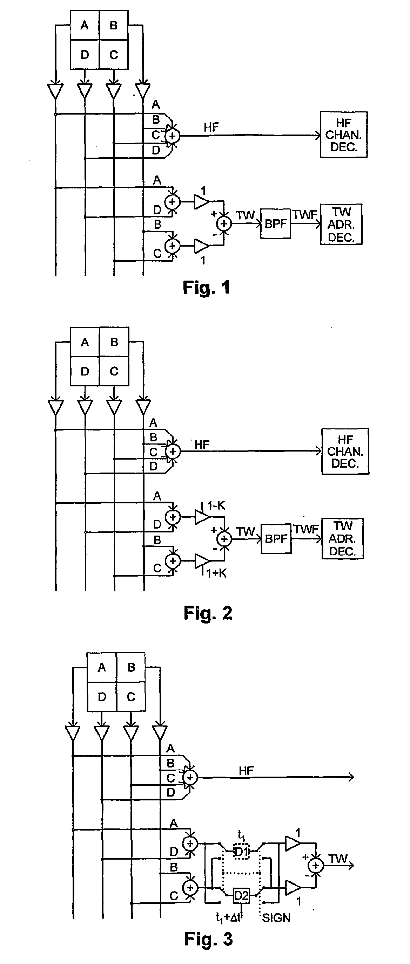

Figure 1 shows a typical arrangement for obtaining a signal (TW) which is used by a decoding unit for decoding of the address information contained in the wobbled tracks of an optical storage medium. The basis for obtaining the signal is to link the signals from a photodetector. In this case use is made of the characteristic that the scanning beam which strikes an optical storage medium causes the so-called push-pull effect. This push-pull effect is based on the principle that a diffraction effect is formed at the edges of the tracks, so that not only is a vertical beam (so-called zero order) reflected from a reflective storage layer in the direction of the photodetector, but higher-order beams are additionally reflected, and are not reflected precisely at right angles to the area of the storage layer. In this case, the objective lens gathers only the zero order and +/- lst order reflected beams and images them on a photodetector, which is subdivided into at least two areas. In this case, destructive interference of different intensity is formed in the overlapping area between the zero order and the +/-lst order, depending on the track position, and this can be evaluated in the form of a tracking error signal. The resultant tracking error signal is thus referred to as the push-pull tracking error. The high-frequency components of this tracking error signal in this case represent the deflections of the wobbled track.

In order to obtain a signal using the push-pull method, the output signals from the photodetector must be linked as shown in Figure 1. The photodetector is typically subdivided into four areas in order to make it possible to obtain a focus error signal at the same time, in addition to the push-pull signal. In order to obtain the tracking error signal using the push-pull effect, it is actually sufficient to subdivide the photodetector into a right-hand half and a left-hand half and to subtract the output signals from these two detector halves from one another. In the case of a four-quadrant detector, this is done by forming the logic link (A+D) - (B+C). The low-frequency component of the output signal formed in this way can then be supplied to the tracking regulator as a tracking error signal. The tracking regulator itself ensures that the scanning beam is moved as close as possible to the track centre of a predetermined track.

In general, in the case of optical storage media in the form of discs which are suitable for reading from or being written to, the pre-moulded tracks are configured in such a way that they represent an interleaved spiral or concentric circles. Particularly in the case of optical storage media which are suitable for being written to, the pre-moulded tracks are additionally wobbled in a specific form in order to find specific positions on the medium. This means that the track is not approximately straight, it is moulded in meandering lines. In this case, address information may be contained in the form of these meandering lines and is used for identification of a specific position on this optical storage medium. In this case, various methods are used for coding, for example frequency modulation, FSK or phase modulation. Furthermore, the wobble signal (track wobble = TW) can also be used for rotation speed information and for presetting a writing data rate.

Normally, the modulation range of this track wobbling is kept small in order to avoid significantly influencing the tracking control and the reading quality of the data signal. The modulation range is thus kept in the order of magnitude of a few percent of the track separation. Furthermore, the modulation frequency is kept in a frequency band which is typically above the upper cut-off frequency of the tracking regulator, but is below the lowermost signal frequency of the data signal. The data signal itself is produced by the brightness contrast on so-called pits (pre-moulded medium) or areas with a different reflective intensity in the case of media which can be written to (phase change). The data signal is normally obtained by forming the sum of the photodetector areas A+B+C+D.

Owing to the small modulation range of the track, the signal-to-noise ratio of the wobble signal (TW) obtained from it is relatively low. On the other hand, the coded address information as well as the fundamental frequency are intended to be decoded and reconstructed reliably, in order to allow reliable reading and writing.

According to the prior art, the signal TW is supplied to a decoding unit and/or to a clock production unit, which is used for decoding the address information contained in the wobble tracks on an optical storage medium or for forming a writing clock.
The signal TW advantageously has interference components removed from it by a suitable filter, before being supplied to the decoding unit and/or to a clock production unit (TWF), as is likewise shown in Figure 1.

On the other hand, the data signal (HF) which reproduces the information content from the disc is formed by addition from the output signals from the photodetector. In order to allow detection by addition of the photodetector signals, the information is stored by writing light/dark contrasts or by pre-moulding so-called pits on the optical storage medium.

If the scanning beam follows the centre of a premoulded track, then the scanning beam is reflected on the area of the optical storage medium in such a way that, in the ideal case, a round light spot is imaged on the photodetector, at whose sides the already mentioned interference resulting from the push-pull effect can be observed. The total intensity of this light spot is modulated by the brightness contrast of the area illuminated by the scanning beam (data signal).

Since the data signal is stored by means of brightness cont rast, the intensity of the light spot is thus modulated in accordance with the reflection on the storage layer. In the ideal case, this is synchronized to the two detector halves. Since the tracking error signal and the signal TW derived from it are derived from the difference between two detector halves, the signal component caused by the brightness contrast is cancelled out during this subtraction process provided that the amplitude and the phase of the intensity modulation on both detector halves are the same.

However, if the imaging of the scanning beam on the detector is not ideally axially symmetrical, then an HF contribution is superimposed on the sought signal component, which reproduces the wobbled track. This means that the signal components which are caused by the wobbled track cannot be evaluated well, so that errors occur in the address evaluation.

The asymmetric illumination of the photodetector may have two substantial effects. A first effect is that the intensity modulation caused by the brightness contrast is not distributed identically on the detector halves A+D and B+C. This means that the signal component caused by the brightness modulation from the detector halves A+D as well as B+C have different intensities and do not cancel one another out during the subtraction process. This can be counteracted by matching the gain to the TW signal before the calculation for the two detector halves. This is illustrated in Figure 2.

A further effect of the asymmetric illumination of the photodetector may, however, also be a shift in time occurring in the brightness modulation between the halves of the detector in addition to the unbalanced brightness modulation on the detector halves. This time shift of the brightness modulation may occur, for example, as a result of the scanning beam scanning..the track with a track offset, or as a result of the light spot being deformed on the storage medium as a result of an adjustment tolerance of the optical scanner itself.

Calculation of the output signals from the detector halves by subtraction with weighted gains as shown in Figure 2 will not lead to the signal components caused by the brightness modulation cancelling one another out when there is a time shift such as this.

WO 98/01855 discloses an arrangement which allows the delay elements $\tau A$ to $\tau D$ to be adjusted automatically before the use of a tracking error signal TE. The aim in this case is to correct for any mean time shifts between the individual detector signals with the aid of the delay elements in such a way that the tracking error signal which is produced later does not have any offset. The adjustment process itself is carried out before the use of the tracking error signal in a closed control loop. As soon as the adjustment process has been completed, the delay element settings are frozen, and the control process is then activated using these constant values. The tracking error signal TE is then obtained from the phase angle of the detector signals whose timings have been corrected.

Document WO 03/017261 discloses a circuit for obtaining a track wobble signal, which is capable of correcting noise in the wobble signal caused by an asymmetric illumination of a photodetector with two detector halves. For this purpose the signals obtained by the detector halves are provided with weighting factors. The weighting factors are adjusted dynamically during operation by linking a data signal component in the wobble signal to a disturbance signal from a disturbance signal generator.

One object of the invention is to propose an arrangement within an appliance for writing to and/or reading from an optical storage medium, which is able to produce a TW signal which is independent of the time shift in the brightness modulation of the photodetector halves.

Based on the assumption that the contrast-dependent components do not cancel one another out when their changing light amplitudes are shifted in time with respect to one another between the two halves of the photodetector, an improvement is achieved by shifting the leading signal in time before the calculation of the two output signals of the two halves of the photodetector before the subtraction process.

A further object of the invention is to propose an arrangement within an appliance for writing to or reading from an optical recording medium, which automatically sets the delay of one or more delay elements such that the interfering brightness contrast/signal components cancel one another out as well as possible during the subtraction process.

An arrangement according to the invention for obtaining a track wobble signal and which achieves the above objects comprises:

- a detector having at least two detector areas for detection of a light beam which is reflected from an optical storage medium,
- a first variable delay element which is switchably associated with a first or a second detector area,
- a subtraction means, whose inputs are connected to the output of the first variable delay element and to the output of the undelayed detector area, and whose output produces a track wobble signal (TW), and
- a detection means, whose output signal is used for automatic setting of the first variable delay element to an optimum value and produces the association between the first variable delay element and the first or second detector area,

wherein the first variable delay element can be adjusted while reading from and/or writing to the optical storage medium.

The invention is based on the object of the HF signal components cancelling one another out on the basis of the changing light modulation between the two halves of the detector as well as possible, subject to the precondition that the time shift between the signal components becomes zero, that is to say the signal components are in phase with one another.

In order to assist understanding, the invention will be explained in the following text with reference to Figures 1 to 12, in which:

Figure 1 shows a typical arrangement for obtaining a wobble signal,

Figure 2 shows an arrangement for obtaining a wobble signal, in which the gain is adapted before the calculation of the two detector halves to produce the wobble signal,

Figure 3 shows a first exemplary embodiment of the invention,

Figure 4 shows an exemplary embodiment of the invention with delay elements in both signal paths,

Figure 5 shows an exemplary embodiment of the invention with a fixed and a variable delay element,

Figure 6 shows an exemplary embodiment of the invention with two delay elements which can be varied by a predetermined initial delay,

Figure 7 shows an exemplary embodiment of the invention with additional adjustment of the gain balance,

Figure 8 shows an exemplary embodiment of the invention with automatic adjustment of the delay,

Figure 9 shows a further exemplary embodiment of the invention with automatic adjustment of the delay,

Figure 10 shows a third exemplary embodiment of the invention with automatic adjustment of the delay,

Figure 11 shows a first exemplary embodiment of the invention, and

Figure 12 shows a first exemplary embodiment of the invention.

A first exemplary embodiment in Figure 3 shows the minimum configuration using a photodetector with four light-sensitive areas, in which a delay element is used in order to produce an interference-free signal TW. First of all, the four photodetector signals are amplified and two signal elements are produced by addition (A+D) and (B+C), reproducing the modulation on the respective halves of the photodetector. Before the subsequent subtraction process is carried out, one of the signals is passed through a delay element D2 with a variably adjustable delay $t_2$, so that the output signal is formed in accordance with the following relationships:

$$TW` = (A+D) - (B+C)'$$

where (B+C)' = (B+C) delayed by D2, in the following text $(B+C)_{D2}$.

The selection of that signal which is intended to be delayed by D2 is governed by which signal has the greater time shift. In the example shown in Figure 3, the signals in the signal path (A+D) lag behind the signals in the signal path (B+C), for which reason this signal path is connected via the switches to the delay element D2. The output of the delay element D2 is itself connected via switches and via an amplifier to the negative input of the summation point. The signal path (A+D) is in this case connected via a second amplifier to the positive input of the summation point. The time delay means that the data signal components imaged on the detector halves can be shifted with respect to one another with a different time shift before the subtraction process by means of a delay element such that they cancel one another out provided that they have the same amplitude.

In practice, it is impossible to produce delay elements D2 whose delay t can be set starting with the value zero. Real delay elements have a minimum delay time $t_1$. For this reason, Figure 3 shows a further delay element D1 which has the same delay value as the minimum delay value of the delay element D2. This allows the relative delays of actual delay elements to be set with respect to one another from zero up to a value $\Delta t$. Thus, for the illustrated switch position:

$$TW^` = (A+D)' - (B+C)'$$

where (A+D)' = (A+D) delayed by D1 with $t_1$, in the following text $(A+D)_{D1}$, and
where (B+C)' = (B+C) delayed by D2 with $t_1+\Delta t$, in the following text $(B+C)_{D2}$.

Normally, it is not possible to determine in advance which of the output signals from the photodetector halves will lead in time and which will lag in time. This depends on the characteristics of the scanner and of the storage medium being read. It must therefore be possible to insert the variable delay element in both signal paths as required. In Figure 3, this is achieved by a switch arrangement having four switches.

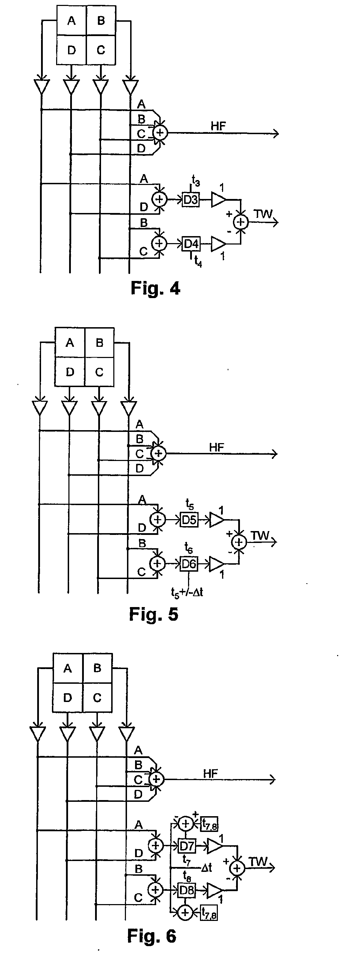

In order to avoid the large number of switches, a respective delay element D3 or D4 is advantageously fitted in the two signal paths, as is shown in Figure 4. The corresponding signal calculation for the second exemplary embodiment is:

$$TW^` = (A+D)_{D3} - (B+C)_{D4}$$

Typically, the delay element is set in that signal path whose signal leads in time. The delay in the signal which is lagging in time is kept to the shortest possible value.

In order to obtain a signal which is independent of the brightness module, it is primarily important for there no longer to be any time shift with respect to one another between the resultant output signals (A+D)' and (B+C)' after passing through the delay elements. Within certain limits of secondary importance to the formation of a TW signal, the absolute time shift between the two sum signals is (A+D)' and (B+C)'. For this reason, it is possible to give one of the two paths a predetermined delay $t_5$ by means of a fixed set delay element $D_5$, and to delay the second signal by means of a variable delay element D6 by $t_6$, as is shown in Figure 5. This has the advantage that the two signals (A+D)' and (B+C)' can be shifted synchronously with respect to one another with the aid of only one variable delay element D6, independently of the time relationship between the undelayed signals (A+D) and (B+C). To be more precise, the delay element D5 has, for example, a fixed delay of $t_5$, while the delay element D6 has a delay of $t_6 = t_5 \pm \Delta t$.

A further variant, which is illustrated in Figure 6, comprises two variable delay elements D7 and D8, whose delay can be varied by a predetermined initial delay $t_{7,8}$, that is to say $t_7 = t_{7,8} \pm \Delta t$ and $t_8 = t_{7, 8} \pm (-\Delta t)$. Since the value $\Delta t$ is adjusted in opposite senses, a delay balance is advantageously found between the two signals (A+D)' and (B+C)' which simplifies the adjustment process.

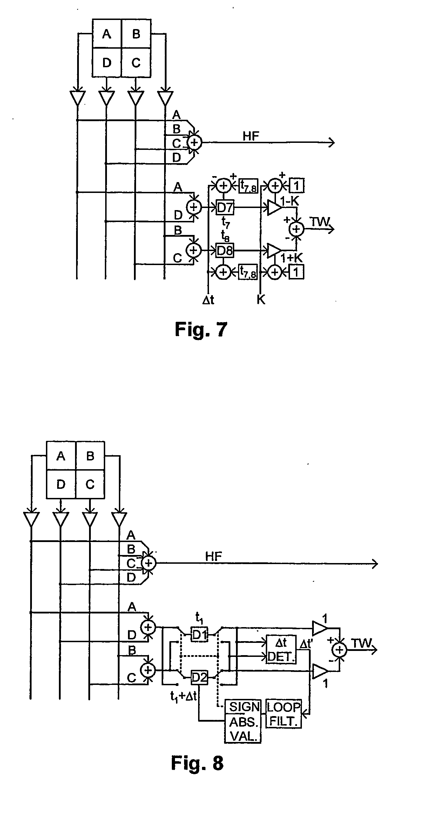

All of the above solutions have the common feature that the delay between the two signals (A+D)' and (B+C)' can be adjusted relative to one another. If the amplitudes of the two signals (A+D)' and (B+C)' differ, then the brightness modulation can be suppressed completely, as is shown in Figure 7, in addition by adjustment of the gain balance. It is particularly advantageous to calculate the signals using the following relationship:

$$TW^` = K*(A+D)' - (1-k)\&(B+C)'$$

where (A+D)' = (A+D) delayed by D7 and with (B+C)' = (B+C) delayed by D8.

The signal that is annotated TWF in Figure 2 is normally obtained by using a filter to remove undesirable signal components, such as low-frequency interference caused by residual tracking errors etc, from the signal TW, which is supplied to the address decoding unit and/or to a clock production unit. For the sake of simplicity, these functional blocks have been omitted in the figures from Figure 3.

During operation of an appliance for writing and/or reading from an optical recording medium, however, it is possible for a situation to occur during operation, as a result of heating, ageing or other disturbance variables, in which the intensity distribution or position of the image on the photodetector varies. A situation such as this can arise in particular as a result of residual errors in the focus control or the tracking control.

If the delay is set just once during the production of the appliance, then it cannot be dynamically adapted to changing variables.

As already described, the sum of the output signals (A+B+C+D) of the photodetector areas is used to obtain the HF signal. The voltage of the HF signal is in this case proportional to the intensity reflected from the optical storage medium, and is thus dependent on the brightness contrast. A corresponding situation applies to the two detector halves (A+D) as well as (B+C), so that, if the delay is correctly set in the two signal paths (A+D)' and (B+C)' before the subtraction process, the HF signal components will cancel one another out, likewise subject to the precondition that the signal amplitudes are of the same magnitude. However, if there is a time difference between the two signals (A+D)' and (B+C)', then an undesirable HF signal component will remain in the signal TW after the subtraction process even if the signal amplitudes are the same.

A time difference detector or else a phase detector is advantageously used in order to determine the time shift between the signals (A+D)' and (B+C)'. The output signal from a time difference detector or phase detector such as this indicates the time shift between its two input signals as a value which is proportional to the time shift. If the time difference between the two input signals (A+D)' and (B+C)' is equal to zero, then the output voltage is likewise equal to zero. The output voltage from the detector will be referred to in the following text as the time error.

If the time difference between the two input signals (A+D)' and (B+C)' is not equal to zero, then it is possible to derive from the magnitude of the time error signal the amount by which one of the two signals (A+D) or (B+C) must be delayed relative to the respective other signal (B+C) or (A+D). This time error signal can accordingly be used to set up a control loop which also automatically produces the best setting for one or more delay elements. A regulator is advantageously connected between the output of the time difference detector and the delay elements, containing a proportional component and/or advantageously an integrating component. A regulator such as this is also often referred to as a loop filter. The advantage of an integrating behaviour in the control loop is that, following a time which is dependent on the integration time constant, the delay is always set such that the time difference between the input signals is zero.

A first exemplary embodiment which includes the characteristics described above is shown in Figure 8. This is based on the arrangement shown in Figure 3 and additionally includes a time difference detector, a regulator, a mathematical sign detector and an absolute-value device. The mathematical sign of the time error signal is used by a switch arrangement to select the signal which is intended to be delayed by the relative value $\Delta t$ by the delay element D2, which can be set variably. The magnitude of the value $\Delta t$ is obtained by the absolute-value device from the output signal from the regulator.

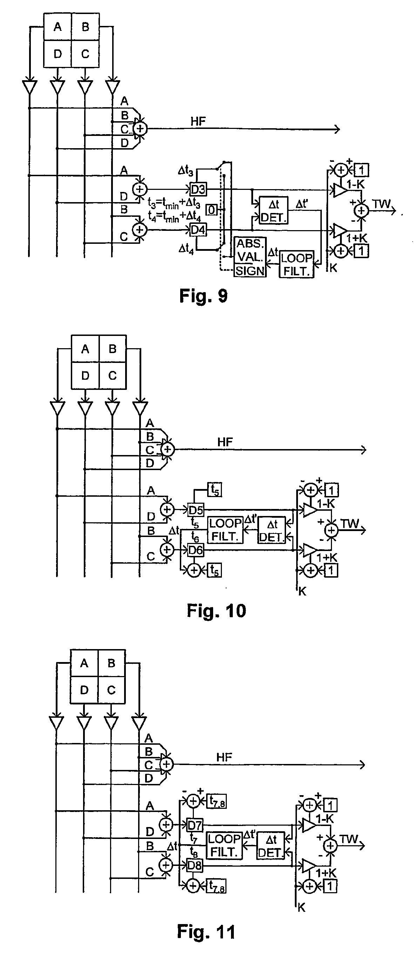

A second exemplary embodiment, which is illustrated in Figure 9, has, in addition to the arrangement shown in Figure 4, a time difference detector, a regulator, a mathematical sign detector and an absolute-value device. The output signal from the mathematical sign detector controls the switch position of a switch arrangement in such a way that the output signal from the absolute-value device controls the delay of that delay element whose input signal is intended to be delayed to a greater extent.

A third exemplary embodiment is shown in Figure 10. This has the advantage that no switch arrangement such as that in the previous exemplary embodiment is required. There is likewise no need to split the output signal from the regulator into its mathematical sign and magnitude. The basic arrangement shown in Figure 5 has a time difference detector and a regulator added to it. The output signal from the regulator directly controls the delay element D6, in which case the output from the regulator can also assume negative values. Owing to the initial delay $t_5$ of the two delay elements, the relative value of the delays can be set to be positive or else negative with respect to one another.

In a fourth exemplary embodiment, as is illustrated in Figure 11, the delay elements can be controlled in opposite senses using the output signal from the regulator. Starting with an initial delay $t_{7,8}$, the output signal from the regulator readjusts the delays of the delay elements until the time difference $\Delta t$, which is defined by the time difference detector, is equal to zero.

The delay elements in the above exemplary embodiments may, for example, be in the form of analogue delay elements, whose delay can be varied by means of a control voltage. If the output signal from the time error detector is, for example, connected to an integrator as the regulator, then the integrator varies its output voltage until the time difference between the signals (A+D)' and (B+C)' becomes zero. If, by way of example, the output signal from the integrator controls the value $\Delta t$ from the delay element D6 in the third exemplary embodiment (see Figure 10), then this results in a control loop with an integrating behaviour.

It can be said for all of the above exemplary embodiments that the time difference detector is advantageously in the form of an edge-controlled phase detector, whose input signals (A+D)' and (B+C)' are each converted into binary signals with the aid of a comparator. An edge-controlled phase detector such as this is incorporated, for example, in the CMOS module CD4046. Particularly advantageous edge-controlled phase detectors are described in EP1058244. The time difference detector may likewise advantageously be preceded by a high-pass filter or bandpass filter for each input signal, which filters allows only the HF signal frequency band to pass and remove undesirable signal components from the input signals.

The functional blocks described above (signal addition of (A+D) and (B+C), signal delay, high-pass filter, comparator, phase detector and loop filter/regulator) can advantageously be implemented by digital signal processing methods. It is thus possible, for example, to implement a delay element by clock-controlled delaying of the sample values or by the use of suitable FIR filters (polyphase filters) with short delay steps. One suitable time difference detector is described as a DPD detector (with or without sequence detection) in EP1058244.

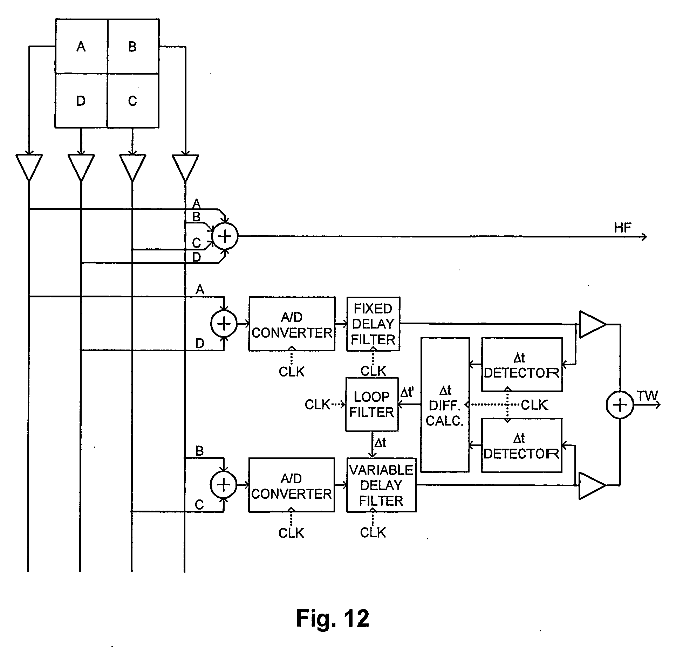

Figure 12 shows one exemplary embodiment of digital signal processing. The basic function in this case corresponds to that in Figure 10, and will not be explained again. The special feature of the digital signal processing is that a sampling clock CLK which is asynchronous with respect to the HF signal is normally used. In contrast to the analogue implementation, the function of the time difference or phase detector is advantageously split into two task elements. Two time detectors first of all determine the time interval between the ocurrence of in each case one signal edge of the digitized input signals (A+D) and (B+C) with respect to a previous clock edge. The two time values which are determined in the respective separately constructed time detector are then determined by means of a time difference calculator, and are passed to the digital regulator as the time difference error. This regulator itself controls one or more digital filters, which appropriately delay the input signal or the input signals. The alternative analogue exemplary embodiment described above can be implemented in a corresponding manner using digital signal processing. Other interfaces between the analogue and the digital signal processing as well as the combination of advantageous exemplary embodiments are also within the area of applicability of the invention.

The methods according to the invention are particularly advantageous in the case of media from whose wobbled tracks address information (CD-R, CD-RW, MO → ATIP; DVD+RW → ADIP; BD, HD-DVD...) is obtained, or whose wobble frequency is used to produce a writing clock (DVD+RW, DVD-RW, BD, HD-DVD...).

**Claims**

1.  Arrangement for obtaining a track wobble signal, comprising:

    - a detector (A, B, C, D) having at least two detector areas (A+D, B+C) for detection of a light beam which is reflected from an optical storage medium, and
    - a subtraction means, whose output produces a track wobble signal (TW),

    **characterized in that** it further comprises:

    - a first variable delay element (D2, D4, D6, D8) which is associated by a switch with either a first or a second detector area (A+D, B+C), wherein inputs of the subtraction means are connected to the output of the first variable delay element (D2) and to the output of the undelayed detector area (A+D, B+C), and
    - a detection means, whose output signal (SIGN) is used for automatic setting of the first variable delay element (D2, D4, D6, D8) to an optimum value and produces the association between the first variable delay element (D2, D4, D6, D8) and the first or second detector area (A+D, B+C),

    wherein the first variable delay element (D2, D4, D6, D8) can be adjusted while reading from and/or writing to the optical storage medium.

2.  Arrangement according to Claim 1, having a second delay element (D3, D5, D7), **wherein:**

    - the first variable delay element (D2, D4, D6, D8) is associated with the first detector area (B+C), and the second delay element (D3, D5, D7) is associated with the second detector area (A+D),
    - the inputs of the subtraction means are connected to the outputs of the first variable delay element (D2, D4, D6, D8) and of the second delay element (D3, D5, D7), and
    - the output signal from the detection means is used for automatic setting of the first variable delay element (D2, D4, D6, D8) to an optimum value.

3.  Arrangement according to Claim 2, **characterized in that** the second delay element (D3, D5, D7) is variable, and the output signal from the detection means is used for automatic setting of the first variable delay element (D2, D4, D6, D8) and of the second variable delay element (D3, D5, D7) to optimum values, wherein the first variable delay element (D2, D4, D6, D8) and the second variable delay element (D3, D5, D7) can be adjusted independently of one another while reading from and/or writing to the optical storage medium.

4.  Arrangement according to one of Claims 1 to 3,
    **wherein** the detection means is a phase detector.

5.  Arrangement according to Claim 4, **wherein** the phase detector determines the time difference between the undelayed output signals from the first detector area (B+C) and the second detector area (A+D).

6.  Arrangement according to Claim 4, **wherein** the phase detector determines the time difference between the delayed output signals from the first detector area (B+C) and the second detector area (A+D).

7. Arrangement according to one of Claims 1 to 6,
**wherein** a regulator is provided, to whose input the output signal from the detection means is applied, and which controls the delay of the first variable delay element D2, D4, D6, D8) and/or of the second variable delay element (D3, D5, D7).

8. Arrangement according to Claim 7, **wherein** the regulator comprises an integrator.

9. Arrangement according to Claim 7, **wherein** the output signal from the regulator is separated in mathematical sign and magnitude by a mathematical-sign detector and an absolute-value device.

10. Appliance for reading from and/or writing to optical storage media, **characterized in that** the appliance has an arrangement according to one of Claims 1 to 9 for obtaining a track wobble signal (TW).

**Patentansprüche**

1. Anordnung zur Gewinnung eines Spurwobbelsignals, umfassend:

   - einen Detektor (A, B, C, D) mit zumindest zwei Detektorflächen (A+D, B+C) zur Detektion eines von einem optischen Speichermedium reflektierten Lichtstrahls, und
   - ein Subtraktionsmittel, dessen Ausgang ein Spurwobbelsignal (TW) liefert,

   **dadurch gekennzeichnet, dass** es ferner umfasst:

   - ein erstes variables Verzögerungselement (D2, D4, D6, D8), das mittels eines Schalters entweder einer ersten oder einer zweiten Detektorfläche (A+D, B+C) zugeordnet ist, wobei Eingänge des Subtraktionsmittels mit dem Ausgang des ersten variablen Verzögerungselementes (D2) und dem Ausgang der unverzögerten Detektorfläche (A+D, B+C) verbunden sind,
   - ein Detektionsmittel, dessen Ausgangssignal (SIGN) zur automatischen Einstellung des ersten variablen Verzögerungselements (D2, D4, D6, D8) auf einen optimale Wert dient und die Zuordnung des ersten variablen Verzögerungselements (D2, D4, D6, D8) zur ersten oder zweiten Detektorfläche bewirkt (A+D, B+C),

   wobei das erste variable Verzögerungselement (D2, D4, D6, D8) während des Lesens und/oder Beschreibens des optischen Speichermediums einstellbar ist.

2. Anordnung gemäß Anspruch 1, umfassend ein zweites Verzögerungselement (D3, D5, D7), **wobei**:

   - das erste variable Verzögerungselement (D2, D4, D6, D8) der ersten Detektorfläche (B+C) und das zweite Verzögerungselement (D3, D5, D7) der zweiten Detektorfläche (A+D) zugeordnet sind,
   - die Eingänge des Subtraktionsmittels mit den Ausgängen des ersten variablen Verzögerungselementes (D2, D4, D6, D8) und des zweiten Verzögerungselementes (D3, D5, D7) verbunden sind, und
   - das Ausgangssignal des Detektionsmittels zur automatischen Einstellung des ersten variablen Verzögerungselements (D2, D4, D6, D8) auf einen optimale Wert dient.

3. Anordnung gemäß Anspruch 2, **dadurch gekennzeichnet, dass** das zweite Verzögerungselement (D3, D5, D7) variabel ist und das Ausgangssignal des Detektionsmittels zur automatischen Einstellung des ersten variablen Verzögerungselements (D2, D4, D6, D8) und des zweiten variablen Verzögerungselements (D3, D5, D7) auf optimale Werte dient, wobei das erste variable Verzögerungselement (D2, D4, D6, D8) und das zweite variable Verzögerungselement (D3, D5, D7) unabhängig voneinander während des Lesens und/oder Beschreibens des optischen Speichermediums einstellbar sind.

4. Anordnung gemäß einem der Ansprüche 1 bis 3, **wobei** das Detektionsmittel ein Phasendetektor ist.

5. Anordnung gemäß Anspruch 4, **wobei** der Phasendetektor die zeitliche Differenz zwischen den unverzögerten Ausgangssignalen der ersten Detektorfläche (B+C) und der zweiten Detektorfläche (A+D) bestimmt.

6. Anordnung gemäß Anspruch 4, **wobei** der Phasendetektor die zeitliche Differenz zwischen den verzögerten Ausgangssignalen der ersten Detektorfläche (B+C) und der zweiten Detektorfläche (A+D) bestimmt.

7. Anordnung gemäß einem der Ansprüche 1 bis 6, **wobei** ein Regler vorgesehen ist, an dessen Eingang das Ausgangssignal des Detektionsmittels anliegt und der die Verzögerung des ersten variablen Verzögerungselements (D2, D4, D6, D8) und/oder des zweiten variablen Verzögerungselements (D3, D5, D7) steuert.

8. Anordnung gemäß Anspruch 7, **wobei** der Regler einen Integrator umfasst.

9. Anordnung gemäß Anspruch 7, **wobei** das Ausgangssignal des Reglers mit einem Vorzeichendetektor und einem Absolutwertbildner in Vorzeichen und Betrag getrennt wird.

10. Gerät zum Lesen und/oder Beschreiben optischer Speichermedien, **dadurch gekennzeichnet, dass** es eine Anordnung gemäß einem der Ansprüche 1 bis 9 zur Gewinnung eines spurwobbelsignals (TW) aufweist.

## Revendications

1. Dispositif de production de signal d'oscillation de piste, comprenant :

   - un détecteur (A, B, C, D) comprenant au moins deux surfaces de détection (A+D, B+C) pour détecter un faisceau lumineux réfléchi par un support de stockage optique, et
   - un moyen de soustraction, dont une sortie produit un signal d'oscillation de piste (TW),

   **caractérisé en ce qu'**il comprend en outre :

   - un premier élément de retard variable (D2, D4, D6, D8) qui est associé par un commutateur à une première ou à une seconde surface de détection (A+D, B+C), dans lequel des entrées du moyen de soustraction sont reliées à la sortie du premier élément de retard variable (D2) et à la sortie de la surface de détection non retardée (A+D, B+C), et
   - un moyen de détection, dont un signal de sortie (SIGN) est utilisé pour un réglage automatique du premier élément de retard variable (D2, D4, D6, D8) sur une valeur optimale et produit l'association entre le premier élément de retard variable (D2, D4, D6, D8) et la première ou seconde surface de détection (A+D, B+C),

   dans lequel le premier élément de retard variable (D2, D4, D6, D8) peut être réglé alors qu'il lit et/ou écrit sur le support de stockage optique.

2. Dispositif selon la revendication 1, comprenant un second élément de retard (D3, 05, D7), **dans lequel :**

   - le premier élément de retard variable (D2, D4, D6, D8) est associé à la première surface de détection (B+C), et le second élément de retard (D3, D5, D7) est associé à la seconde surface de détection (A+D),
   - les entrées du moyen de soustraction sont reliées aux sorties du premier élément de retard variable (D2, D4, D6, D8) et du second élément de retard (D3, D5, D7), et
   - le signal de sortie du moyen de détection est utilisé pour un réglage automatique du premier élément de retard variable (D2, D4, D6, D8) sur une valeur optimale.

3. Dispositif selon la revendication 2, **caractérisé en ce que** le second élément de retard (D3, D5, D7) est variable et le signal de sortie du moyen de détection est utilisé pour un réglage automatique du premier élément de retard variable (D2, D4, D6, D8) et du second élément de retard variable (D3, D5, D7) sur des valeurs optimales, dans lequel le premier élément de retard variable (D2, D4, D6, D8) et le second élément de retard variable (D3, D5, D7) peuvent être réglés indépendamment l'un de l'autre tout en lisant et/ou en écrivant sur le support de stockage optique.

4. Dispositif selon une des revendications 1 à 3, **dans lequel** le moyen de détection est un détecteur de phase.

5. Dispositif selon la revendication 4, **dans lequel** le détecteur de phase détermine la différence de temps entre les signaux de sortie non retardés de la première surface de détection (B+C) et de la seconde surface de détection (A+D).

6. Dispositif selon la revendication 4, **dans lequel** le détecteur de phase détermine la différence de temps entre les signaux de sortie retardés de la première surface de détection (B+C) et de la seconde surface de détection (A+D).

7. Dispositif selon une des revendications 1 à 6, **dans lequel** un régulateur est fourni, à l'entrée duquel le signal de sortie du moyen de détection est appliqué, et qui contrôle le retard du premier élément de retard variable (D2, D4, D6, D8) et/ou du second élément de retard variable (D3, D5, D7).

8. Dispositif selon la revendication 7, **dans lequel** le régulateur comprend un intégrateur.

9. Dispositif selon la revendication 7, **dans lequel** le signal de sortie du régulateur est séparé en signe mathématique et en amplitude par un détecteur de signe mathématique et un dispositif de valeur absolue.

10. Appareil permettant de lire et/ou d'écrire sur des supports de stockage optiques, **caractérisé en ce que** l'appareil comprend un dispositif selon une des revendications 1 à 9 permettant de produire un signal d'oscillation de piste (TW).

**Fig. 1**

**Fig. 2**

**Fig. 3**

**Fig. 4**

**Fig. 5**

**Fig. 6**

**Fig. 7**

**Fig. 8**

Fig. 9

Fig. 10

Fig. 11

**Fig. 12**

**REFERENCES CITED IN THE DESCRIPTION**

**Patent documents cited in the description**

- WO 9801855 A
- WO 03017261 A
- EP 1058244 A